Europäisches Patentamt

European Patent Office

Office européen des brevets

(11) Veröffentlichungsnummer: **0 371 952**
**A2**

(12) **EUROPÄISCHE PATENTANMELDUNG**

(21) Anmeldenummer: 89890217.6

(22) Anmeldetag: 24.08.89

(51) Int. Cl.5: **F16L 47/00, B29C 69/02, B29D 23/22, C08L 83/10**

(30) Priorität: 01.12.88 AT 2955/88

(43) Veröffentlichungstag der Anmeldung:
06.06.90 Patentblatt 90/23

(84) Benannte Vertragsstaaten:
**BE CH DE ES FR GB IT LI NL**

(71) Anmelder: **Egger, Karl**
**Mitterweg 2**
**A-4203 Altenberg(AT)**

(72) Erfinder: **Rametsteiner, Karl**
**Reisingerweg 4**
**A-4040 Linz(AT)**
Erfinder: **Egger, Karl**
**Mitterweg 2**
**A-4203 Altenberg(AT)**

(74) Vertreter: **Hübscher, Heiner, Dipl.-Ing. et al**
**Patentanwälte Dipl.-Ing. Gerhard Hübscher,**
**Dipl.-Ing. Helmut Hübscher Dipl.-Ing. Heiner**
**Hübscher Spittelwiese 7**
**A-4020 Linz(AT)**

(54) **Verfahren zur Herstellung von für wasserführende Leitungen, insbesondere Brauch- bzw. Heisswasserleitungen, bestimmten Rohren oder Formstücken.**

(57) Für wasserführende Leitungen, insbesondere Brauch- bzw. Heißwasserleitungen bestimmte Rohre oder Formstücke bestehen aus aus durch chemischen Einbau eines Silans und nachfolgende Hydrolyse entstehendem, vernetztem Polyolefin. Um bei der Leitungsmontage nicht auf die leichte Verarbeitbarkeit bzw. die Schweißbarkeit des unvernetzten Polymers verzichten zu müssen, werden die gefertigten Rohre oder Formstücke vor der Hydrolyse unter Feuchtigkeitsabschluß verpackt bzw. gelagert. Die Vernetzungsreaktion wird erst nach der Montage durch das Betriebswasser selbst herbeigeführt.

EP 0 371 952 A2

## Verfahren zur Herstellung von für wasserführende Leitungen, insbesondere Brauch- bzw. Heißwasserleitungen, bestimmten Rohren oder Formstücken

Die Erfindung bezieht sich auf ein Verfahren zur Herstellung von für wasserführende Leitungen, insbesondere Brauch-bzw. Heißwasserleitungen, bestimmten Rohren oder Formstücken, die aus durch chemischen Einbau eines Silans und nachfolgende Hydrolyse entstehendem vernetztem Polyolefin bestehen.

Bei einer solchen Vernetzung wird entweder ein Copolymerisat aus Vinylsilan und Olefin eingesetzt oder beispielsweise einem Polyäthylen geeigneter Dichte und geeigneten Polymerisationsgrades ein Vinylsilan, z. B. beim Extrudieren aufgepfropft und dieses Polymer unmittelbar darauf durch Behandlung in einer Heißwasser- oder Heißdampfkammer hydrolisiert und damit vernetzt. Die sich dabei ergebenden Bindungen sind so stark, daß die thermoplastischen Eigenschaften verlorengehen und ein Duroplast entsteht, soferne der Vernetzungsgrad über 70 % liegt. Es werden dadurch zwar eine wesentlich höhere Wärmebeständigkeit und teilweise höhere mechanische Festigkeitswerte erreicht, es sind dann aber mangels thermoplastischer Verformbarkeit verschiedene Verarbeitungsmethoden, wie Spritzguß, Schweißen, Tiefziehen usw. nicht mehr möglich.

Bedingt durch die zunehmend schlechter werdende Wasserqualität ergibt sich ein Bedarf an korrosionsfesten Rohren und Formstücken in der Istallationstechnik für den Einsatz auf dem Heiz- und Brauchwassergebiet. Hier können Temperaturen bis zu 110 °C und Innendrücke bis 10 bar auftreten, wobei die Lebensdauer 50 Jahre und mehr betragen soll und außerdem die Forderung nach Preiswürdigkeit und einfacher Verarbeitungsmöglichkeit unter Baustellenbedingungen besteht.

Diese Bedingungen werden von den bisherigen Werkstoffen nicht voll erfüllt. Polypropylen ist zwar preiswürdig und schweißbar, läßt sich aber nur bis zu einer Dauergebrauchstemperatur von 60 °C verwenden. Nicht vernetztes Polyäthylen ist ebenfalls preiswürdig und gut schweißbar, verträgt aber nur Temperaturen bis zu 40 °C, wenn einem Druck von 10 bar standgehalten werden soll. Chloriertes Polyvinylchlorid ist verhältnismäßig teuer und nur klebbar, kann aber bis zu 90 °C eingesetzt werden. Vernetztes Polyäthylen ist, wie vorstehend ausgeführt, wärmebeständig (bis zu 110 °C) und auch hinreichend druckfest, hat aber den großen Nachteil, nicht mehr thermoplastisch, also nicht mehr schweißbar zu sein. Es müssen also Rohre bzw. Formstücke untereinander auf mechanischem Wege durch Verschrauben oder Klemmen verbunden werden, wobei derartige Verbindungen aber nicht nur den Arbeitsaufwand erhöhen, sondern auch zusätzliche Dichtungsmittel benötigen und im Dauergebrauch unsicher sind.

Der Erfindung liegt daher die Aufgabe zugrunde, ein Verfahren anzugeben, mit dessen Hilfe es möglich ist, Rohre oder Formstücke aus preisgünstigem, vernetztem Polyolefin zu erhalten, ohne auf die leichte Verarbeitbarkeit, insbeson dere das Schweißen, verzichten zu müssen.

Die Erfindung löst die gestellte Aufgabe dadurch, daß die gefertigten Rohre oder Formstücke vor der Hydrolyse unter Feuchtigkeitsabschluß verpackt bzw. gelagert werden und die Vernetzungsreaktion erst nach der Montage durch das Betriebswasser selbst herbeigeführt wird.

Es wird also das Herstellungsverfahren vor der Hydrolyse und damit vor der eigentlichen Vernetzung unterbrochen, so daß die gefertigten Rohre oder Formstücke, von denen zunächst jede Feuchtigkeit ferngehalten wird, ihre vollen thermoplastischen Eigenschaften beibehalten und dann bei der Leitungsmontage ohne weiteres dicht verschweißt oder in sonstiger Weise bearbeitet werden können. Wenn dann die Rohre bzw. Formstücke die fertig montierte Leitung bilden und diese in Betrieb genommen wird, vernetzt das Polymer durch das Wasser im Rohr- bzw. Formstückinneren zu vernetztem Polyolefin mit den gewünschten Duromer-Eigenschaften, also mit der entsprechenden Wärmebeständigkeit und Druckfestigkeit. Dabei ist es besonders günstig, daß mit höherer Wassertemperatur in der Leitung, also mit steigender Anforderung an das Material auch die Vernetzung beschleunigt wird und von innen nach außen besonders schnell vor sich geht, wobei sich eine Ergänzung von außen durch die Luftfeuchtigkeit ergibt. Es wird ein Vernetzungsgrad von über 90 % erreicht und das Rohr- bzw. Formstück ist bis zu einer Temperatur von 110 °C bei 10 bar Innendruck langfristig verwendbar.

Das erfindungsgemäße Verfahren wird anhand der nachfolgenden Beispiele noch näher erläutert:

Beispiel 1:

Ein Polyäthylen-Vinylsilancopolymer (Visico 1405 der Fa. Neste Chemicals) wurde mit 5 % Vernetzungs katalysator auf Zinnbasis (Visico News 1392) vermischt und nach Zugabe von 1 % eines Pigments zu einem Rohr mit 20 mm Durchmesser und 3,4 mm Wandstärke extrudiert. Durch Vakuumentgasung wurde dafür gesorgt, daß in der Plastifizierzone keine Feuchtigkeit an die Polymeroberfläche gelangt. Nach der Extrusion war das Rohr mittels Polyfusionsschweißung (Muffenverschweißung) sehr gut verarbeitbar. Von dem Rohr wurde bis zum Einbau in eine Warmwasserleitung jegliche Feuchtigkeit ferngehalten. Nach Herstellung der Leitung und deren Inbetriebnahme wurde ein Vernetzungsgrad von über 90 %, gemessen als in kochendem Xylol unlöslicher Anteil, erreicht.

Beispiel 2:

Ein Polyäthylen von niedrigem spezifischem Gewicht (MFI 1,5 190/5 Dichte 0,918) wurde mit 3 % Vinyltrimethoxysilan, 0,5 % Peroxid und 0,2 % Dibutylzinndilaurat gemischt, wobei die Polymeroberfläche die flüssigen Zutaten vollständig absorbierte. Das Gemisch wurde gemäß Beispiel 1 weiterverarbeitet, wobei das Rohr nach Verlegung und Vernetzung im Leitungsbetrieb einen Vernetzungsgrad von 94,5 bis 97 % und eine Wärmebeständigkeit von 110 bis 114 °C aufwies.

Beispiel 3:

Ein Polypropylen-Polyäthylen-Copolymer mit einem spezifischen Gewicht von 0,905 (MFI 1,9 190/5) wurde mit 4 % Vinyltriäthoxysilan, 0,6 % Peroxid und 0,2 % Dibuthylzinndicarboxylat gemischt, worbei die Polymeroberfläche die flüssigen Zutaten ebenfalls vollständig absorbierte. Das Gemisch wurde in gleicher Weise wie in Beispiel 1 weiterverarbeitet, wobei das Rohr nach Verlegung und Vernetzung im Leitungsbetrieb einen Vernetzungsgrad von 88 % und eine Wärmebeständigkeit von 110 °C zeitigte.

**Ansprüche**

Verfahren zur Herstellung von für wasserführende Leitungen, insbesondere Brauch- bzw. Heißwasserleitungen, bestimmten Rohren oder Formstücken, die aus durch chemischen Einbau eines Silans und nachfolgende Hydrolyse entstehendem, vernetztem Polyolefin bestehen, dadurch gekennzeichnet, daß die gefertigten Rohre oder Formstücke vor der Hydrolyse unter Feuchtigkeitsabschluß verpackt bzw. gelagert werden und die Vernetzungsreaktion erst nach der Montage durch das Betriebswasser selbst herbeigeführt wird.